# EUROPEAN PATENT APPLICATION

(11) **EP 3 085 440 A1**
(43) Date of publication of application: **26.10.2016**
(21) Application number: 14871490.0
(22) Date of filing: 16.12.2014
(51) Int. Cl.: B01J 23/10, B01J 21/04, B01J 37/02, F01N 3/00

(54) **CATALYTIC MEMBER FOR PURIFYING EXHAUST GASES, AND WASHCOAT**

(30) Priority: 20.12.2013 KR 20130160177
(71) Applicant: Heesung Catalysts Corporation, Siheung-si Gyeonggi-do 429-848 (KR)
(72) Inventor: HAN, Hyun-sik, Seoul 138-842 (KR); SONG, Jin-Woo, Siheung-si Gyeonggi-do 429-760 (KR); LEE, Kwi-Yeon, Osan-si Gyeonggi-do 447-240 (KR)
(74) Representative: Regimbeau
(86) International application number: PCT/KR2014/012381
(87) International publication number: WO 2015/093809

(57) **Abstract**

Disclosed are a washcoat and a catalyst member coated with the washcoat, wherein the washcoat, which is applied on a substrate as a catalyst member for purifying exhaust gas, includes a catalytically inactive refractory oxide not impregnated with catalytic components, and thus, even when the support structure physically collapses due to the sintering of the support, the diffusion rate of exhaust gas can be maintained, and the exposed portion of catalytically active components can be maintained, thus increasing the service life of the catalyst.

## Description

### Technical Field

The present invention relates to a catalyst member for purifying exhaust gas from internal combustion engines for vehicles, and to a washcoat.

More particularly, the present invention relates to a washcoat, which is applied on a substrate or carrier for purifying exhaust gas, and is composed of a catalytically active refractory oxide impregnated with catalyst components and a catalytically inactive refractory oxide not impregnated with catalyst components, and to a catalyst member for purifying exhaust gas, which is coated with the washcoat.

### Background Art

Typically known is a catalyst member configured such that an adiabatic substrate is coated with one or more layers of a refractory oxide. The terms understood by those skilled in the art are summarized below. The term "substrate" refers to a member that is coated with a slurry containing catalyst components, typically called a washcoat, and is a part of a post-treatment system of an internal combustion engine for a vehicle. The substrate has a long flow conduit extending from an exhaust gas inlet to an exhaust gas outlet and partitioned by a thin wall, and the conduit is referred to as a cell. The terms "substrate" and "catalyst member" may be used interchangeably herein. The washcoat is applied or deposited on the thin wall to thus form a monolayer or a multilayer. The slurry contains a variety of precious metal catalyst components, and a catalytically active refractory oxide is typically impregnated with the precious metal catalyst components. The refractory oxide having a large specific surface area is impregnated with the catalyst components, thus ensuring a plurality of catalytically active sites. In order to increase the number of such active sites, the refractory oxide used as the catalyst support is an oxide having a large specific surface area through the development of pores. Such an oxide is referred to as a support because it is supported by being impregnated with catalytically active components. As used herein, "impregnation" and "loading" may be used interchangeably, and mean the phenomenon or state in which a supporting material is fixed to one surface or the clearance of the substrate.

### Disclosure

### Technical Problem

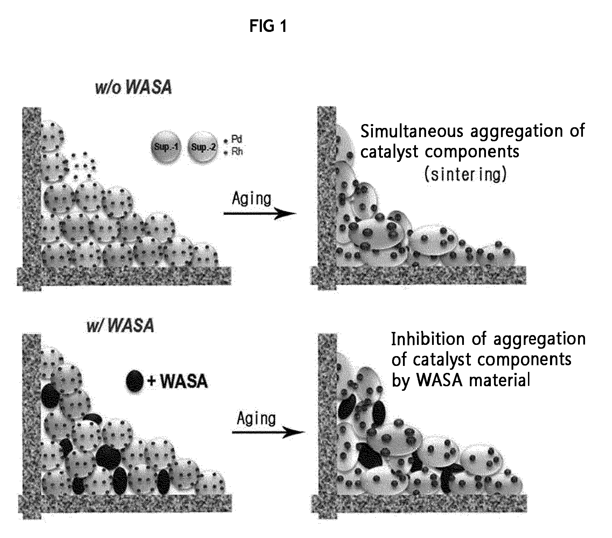

The left side of FIG. 1 schematically illustrates a configuration in which a substrate is coated with platinum and rhodium as precious metal components loaded on a support. As shown on the left side of FIG. 1, the washcoat coating layer is sintered due to the heat of the exhaust gas, the heat of reaction between the exhaust gas and the catalyst component, or other effects, and thus structurally collapses, whereby the exposed portion of catalytically active components loaded on the support is decreased, and the diffusion of exhaust gas into the support is decreased, thus impeding catalysis.

### Technical Solution

In order to solve such problems, there is required a means for maintaining the diffusion rate of exhaust gas and the exposed portion of catalytically active components, despite the sintering of the support due to the usage of the catalyst member for a long time, thereby increasing the lifetime of the catalyst.

An object of the present invention is to provide a washcoat, which is applied on a substrate as a catalyst member for purifying exhaust gas and contains a catalytically inactive refractory oxide not impregnated with catalyst components, and thus, even when the support structure physically collapses due to sintering of the support, the diffusion rate of exhaust gas may be maintained, and the exposed portion of catalytically active components is retained, thereby prolonging the service life of the catalyst. Another object of the present invention is to provide a catalyst member coated with such a washcoat.

The above object is accomplished by the washcoat applied on the substrate of the catalyst member for purifying exhaust gas, the washcoat comprising a catalytically active refractory oxide impregnated with catalyst components and a catalytically inactive refractory oxide not impregnated with catalyst components. Without limitation thereto, the catalytically active refractory oxide is finely ground and has a specific surface area of about 10 m²/g or more, and the catalytically inactive refractory oxide is a thermally stable oxide that is finely ground and has a specific surface area of less than about 200 m²/g.

### Advantageous Effects

Specifically, a catalytically active refractory oxide is active alumina or ceria, and a catalytically inactive refractory oxide is selected from the group consisting of inactive alumina, ceria, and zirconia. More specifically, the washcoat is configured such that the weight ratio of catalytically active refractory oxide to catalytically inactive refractory oxide ranges from 90:25 to 90:120. Because the substrate is coated with such a washcoat, even when the support structure collapses over time, the diffusion rate of exhaust gas can be maintained, thus increasing the lifetime of the catalyst.

### Description of Drawing

FIG. 1 schematically illustrates a coating layer using a conventional washcoat and a coating layer using a washcoat according to the present invention.

### Best Mode

Hereinafter, a detailed description will be given of the present invention.

The present invention addresses a washcoat that is applied on a catalyst member for purifying exhaust gas. Unlike a conventional washcoat, the washcoat according to the present invention further includes a catalytically inactive refractory oxide not impregnated with catalyst components. The conventional washcoat is composed mainly of a catalytically active refractory oxide impregnated with catalyst components. The refractory oxide may function as a support that is impregnated with catalyst components or may be an oxygen storage capacity (OSC) material composed mainly of ceria. Examples of the support refractory oxide may include, but are not limited to, active alumina, alpha alumina, silica, silica-alumina, and titania. It is appropriate to use active alumina, such as gamma alumina, and the specific surface area of the active alumina falls in the range of 10 to 300 m²/g. The specific surface area of cerium oxide, which is the OSC material, also falls in the range of 10 to 300 m²/g. The support such as the refractory oxide and/or the OSC material such as cerium oxide may be impregnated with catalyst components, such as platinum, rhodium and the like. However, the coating layer having a conventional washcoat deposited thereon is degraded and thus sintered depending on the usage time or conditions, thereby remarkably deteriorating the catalytic performance.

The present inventors have ascertained that, when a conventional washcoat is added with a material having high thermal stability, the coating layer of the washcoat is maintained by virtue of the newly added material having high thermal stability even upon sintering of the support or OSC material, containing catalyst components, thus retaining the number of active sites and maintaining the pores or clearances in the washcoat, thereby increasing the diffusion of exhaust gas. The right side of FIG. 1 is a concept view of the present invention.

Herein, the material having high thermal stability (which may also be referred to as WASA) is defined as a catalytically inactive refractory oxide not impregnated with catalyst components. This refractory oxide is the same type of refractory oxide as the support or OSC material impregnated with the catalyst, but is not impregnated with catalyst components, unlike such a material, and is thus represented as a catalytically inactive material. Examples of the catalytically inactive refractory oxide not impregnated with catalyst components according to the present invention may include materials having high thermal stability, and oxides configured to have a specific surface area of 200 m²/g or less, which are compared with a support or OSC material having a specific surface area of 10 m²/g or more. The material having high thermal stability according to the present invention is not limited, but is exemplified by alumina, ceria, zirconia, silicon carbide, an yttria-zirconia composite oxide, and a metal powder. The shape of the material having high thermal stability is not limited, but may include, for example, a spherical shape, a cylindrical shape, a rectangular parallelepiped shape, and other polyhedral shapes. Such a material, having high thermal stability, is commercially available as alumina (made by SASOL) and a cerium-zirconium-rare earth metal composite oxide (made by SOLVAY).

Below is a description of the method of preparing the washcoat for a catalyst for purifying exhaust gas according to the present invention.

A catalytically active refractory oxide, which is finely ground, is placed in a mixer. Active alumina, such as gamma alumina, may be used as the finely ground catalytically active refractory oxide. The finely ground catalytically active refractory oxide has a particle diameter of 1 to 100 µm, more appropriately 1 to 50 µm, and still more appropriately 1 to 30 µm. A platinum, palladium or rhodium compound is added to the finely ground catalytically active refractory oxide. For example, the precious metal compound in a solution or suspension phase may be added little by little or all at once to the finely ground catalytically active refractory oxide, while stirring using a mixer. The amount of the precious metal compound is preferably 1 to 100 g based on 1 kg of the finely ground catalytically active refractory oxide. Subsequently, an acetic acid solution, especially a 10 to 20% acetic acid solution, is added to the mixture comprising the finely ground catalytically active refractory oxide and the precious metal compound. The above description corresponds to the case where the catalytically active refractory oxide may function only as the support. As mentioned above, the OSC material is impregnated with the catalyst component, and is thus responsible for a support function and/or an oxygen storage function. Also, the OSC material may be combined with the catalytically active refractory oxide, which functions as the support. The refractory oxide thus obtained, containing the precious metal compound, selectively cerium oxide, acetic acid, and pure water, is placed in a mill and then ground, thus preparing a slurry. According to the present invention, the slurry may further include a catalytically inactive refractory oxide having a specific surface area of 200 m²/g or less, which is compared with the support or OSC material which has a specific surface area of 10 m²/g or more and is impregnated with the catalyst, thereby constituting the main feature of the invention. The preferred material having high thermal stability is alumina. The slurry further including the catalytically inactive oxide is milled again, whereby the average particle diameter of the catalytically active refractory oxide, the selectively catalytically active cerium oxide, and the catalytically inactive oxide is adjusted to the range of 0.1 to 10 µm, and more appropriately 1 to 5 µm. The produced slurry is transferred into a container, and pure water is added thereto, thus preparing a slurry having a predetermined specific gravity, for example, a specific gravity of 1.20 to 1.75 g/ml. In the washcoat according to the present invention, the precious metal components are loaded only on the support and/or OSC material having a specific surface area of 10 m²/g or more, and the catalyst components are not present on the catalytically inactive refractory oxide having a specific surface area of 200 m²/g or less, preferably alumina.

The washcoat is applied on the substrate, which is briefly described below. The slurry or washcoat is deposited on the substrate. The substrate may be a cylindrical monolithic cordierite substrate. The slurry is deposited on the substrate for 1 to 60 sec, and appropriately 3 to 10 sec, and an excess of the slurry in the cell is removed through suction or blowing, and the substrate is calcined in air at 200 to 900°C, and more appropriately 300 to 800°C, for 10 min to 10 hr, and more appropriately 15 to 60 min. By virtue of such a slurry coating process, the alumina and/or cerium oxide containing precious metal, and the alumina containing no precious metal, may be deposited on the substrate at a weight ratio of 90:25 to 90:125. In the case where the alumina containing no precious metal is added to the slurry in a concentration less than the above lower limit, it cannot physically support the washcoat at high temperatures, and thus the washcoat may break down upon sintering of the support. On the other hand, in the case where the alumina (WASA) containing no precious metal is added to the slurry in a concentration higher than the above upper limit, the activity of the catalyst applied on the substrate may deteriorate.

### Mode for Invention

A better understanding of the present invention may be obtained through the following examples. The present inventors have prepared a catalyst configured such that palladium is loaded on an OSC material, in lieu of typical supports, but the present invention is not limited thereto. As mentioned above, the precious metal may include platinum, palladium, and/or rhodium, and may be loaded on the preferred support, for example, an alumina material, with or without the OSC material.

### [Example 1]

A cerium-zirconium-rare earth metal composite oxide (made by SOLVAY) having an average particle diameter of about 20 µm was placed in a mixer. While the ceria was stirred, 228.94 g of a Pd(NO₃)₂ solution containing 5 g of Pd was added little by little and uniformly dispersed. Subsequently, 200 ml of 15 wt% acetic acid was added dropwise and uniformly dispersed. 900 g (dry weight basis) of Pd-containing ceria, 500 g of high-density alumina (made by SASOL) having an average particle diameter of about 20 µm, 50 ml of acetic acid, and 550 ml of pure water were milled for about 3 hr, thus forming a washcoat in a slurry phase. The average particle diameter of ceria and alumina in the slurry was about 3.5 µm. The slurry was transferred into a 2 L container, and pure water was added thereto, and thus the specific gravity of the slurry was adjusted to 1.56 g/ml. The slurry was deposited on a cylindrical cordierite monolithic substrate [diameter: 69 mm, length: 105.7 mm, volume: 0.6 L, about 600 cells/in²] for 5 sec. Excess slurry in the cell was removed, and the substrate was calcined for 30 min in flowing air at 500°C.

### [Example 2]

A washcoat was prepared in the same manner as in Example 1, with the exception that 1000 g of high-density alumina (made by SASOL) having an average particle diameter of about 20 µm was used.

### [Example 3]

A washcoat was prepared in the same manner as in Example 1, with the exception that 500 g of alumina (made by SASOL), having an average particle diameter of about 20 µm and having thermal stability lower than that of HP14-150, was used.

### [Example 4]

A washcoat was prepared in the same manner as in Example 1, with the exception that 500 g of a cerium-zirconium-rare earth metal composite oxide (made by SOLVAY) having an average particle diameter of about 10 µm was used.

### [Comparative Example]

In order to evaluate the performance of the catalytically inactive refractory oxide according to the present invention, this Comparative Example was performed in the same manner as in Example 1, with the exception that the slurry did not contain alumina.

### Catalyst performance test

Each of the catalyst members obtained in Examples 1 to 4 and Comparative Example was degraded for 50 hr in an exothermic degradation mode in an actual engine. For evaluation, in FTP-75 mode, CO, THC (hydrocarbon), and NOx conversions were tested. The results of unconverted exhaust gas are shown in Table 1 below.

**[Table 1]**

| | NOx (mg/mile) | CO/10 (mg/mile) | THC (mg/mile) |
|---|---|---|---|
| Ex. 1 | 171.6 | 84.8 | 49.5 |
| Ex. 2 | 141.4 | 62.3 | 45.5 |
| Comp. Ex. | 255.9 | 115.1 | 65.5 |

As is apparent from the above results, when using the washcoat according to the present invention, comprising the catalytically active refractory oxide impregnated with catalyst components and the catalytically inactive refractory oxide not impregnated with catalyst components, the NOx, CO and THC conversion efficiencies were increased, and were proportional to the increase in the amount of the high-density refractory oxide.

**[Table 2]**

| | NOx (mg/mile) | CO/10 (mg/mile) | THC (mg/mile) |
|---|---|---|---|
| Ex. 1 | 129.5 | 86.9 | 44.5 |
| Ex. 3 | 145.8 | 95.6 | 45.5 |
| Ex. 4 | 166.8 | 91.1 | 48.6 |

As is apparent from the above results, the catalytic activity varied depending on the type of catalytically inactive refractory oxide (WASA) not impregnated with catalyst components according to the present invention. Generally, the higher the thermal stability of the material, the higher the catalytic activity. Specifically, it can be seen that the alumina component results in activity superior to the zirconia component, and the WASA components according to the present invention significantly contribute to NOx conversion, rather than THC conversion.

## Claims

1. A catalyst member for purifying exhaust gas, comprising a refractory monolithic substrate, and a washcoat applied in one or more layers on the substrate and containing a catalytically active refractory oxide, wherein the washcoat comprises a catalytically active refractory oxide impregnated with catalyst components and a catalytically inactive refractory oxide not impregnated with catalyst components.

2. The catalyst member of claim 1, wherein the catalytically active refractory oxide is finely ground and has a specific surface area of about 10 m²/g or more, and the catalytically inactive refractory oxide is a thermally stable oxide that is finely ground and has a specific surface area of less than about 200 m²/g.

3. The catalyst member of claim 1 or 2, wherein the catalytically active refractory oxide is active alumina or ceria, and the catalytically inactive refractory oxide is selected from the group consisting of inactive alumina, ceria, and zirconia.

4. The catalyst member of claim 1 or 2, wherein a weight ratio of the catalytically active refractory oxide to the catalytically inactive refractory oxide ranges from 90:25 to 90:120.

5. A washcoat, which is applied on a substrate of a catalyst member for purifying exhaust gas, wherein the washcoat comprises a catalytically active refractory oxide impregnated with catalyst components and a catalytically inactive refractory oxide not impregnated with catalyst components.

6. The washcoat of claim 5, wherein the catalytically active refractory oxide is finely ground and has a specific surface area of about 10 m²/g or more, and the catalytically inactive refractory oxide is a thermally stable oxide that is finely ground and has a specific surface area of less than about 200 m²/g.

7. The washcoat of claim 5 or 6, wherein the catalytically active refractory oxide is active alumina or ceria, and the catalytically inactive refractory oxide is selected from the group consisting of inactive alumina, ceria, and zirconia.

8. The washcoat of claim 5 or 6, wherein a weight ratio of the catalytically active refractory oxide to the catalytically inactive refractory oxide ranges from 90:25 to 90:120.
